# EUROPÄISCHE PATENTANMELDUNG

(11) **EP 1 548 909 A1**
(43) Veröffentlichungstag der Anmeldung: **29.06.2005**
(21) Anmeldenummer: 04028401.0
(22) Anmeldetag: 01.12.2004
(51) Int. Cl.: H02G 3/36

(54) **Verlegesystem zum geordneten Verlegen von Starkstrom- und/oder Schwachstromleitungen in Doppel- bzw. Hohlraumböden**

(30) Priorität: 19.12.2003 DE 20319710 U
(71) Anmelder: Tehalit GmbH, 67716 Heltersberg (DE)
(72) Erfinder: Kauf, Peter, 66482 Zweibrücken (DE); Szabo, Thomas, 66849 Landstuhl (DE); Schneckmann, Horst, 67705 Trippstadt (DE)
(74) Vertreter: Patentanwälte Möll und Bitterich

(57) **Zusammenfassung**

Gegenstand der Erfindung ist ein Verlegesystem zum geordneten Verlegen von Starkstrom- und/oder Schwachstromleitungen in Doppel- bzw. Hohlraumböden.

Vorgesehen ist ein flaches Bodenprofil (10) mit Einrichtungen (12) zum Befestigen an einer Unterlage, z. B. dem Rohboden eines Gebäudes. Des weiteren sind vorgesehen Verlegehilfsprofile (20). Diese besitzen einen U-Querschnitt mit einem Basissteg (21), zwei Schenkeln (23) und Befestigungsvorrichtungen (22) zum Befestigen entweder am Bodenprofil (10) oder an der Unterlage. An den Schenkeln (23) der Verlegehilfsprofile (20) sind Verbindungsprofile (25) angeformt, die mit entsprechenden Verbindungsprofilen (15) an der Unterseite der Bodenprofile (10) kooperieren, so dass die elektrischen Kabel und Leitungen bei Bedarf auch mehrstöckig verlegt werden können.

## Beschreibung

Die Erfindung betrifft Verlegesysteme zum geordneten Verlegen von Starkstromund/oder Schwachstromleitungen in Doppel- bzw. Hohlraumböden gemäß dem Oberbegriff des Anspruchs 1.

In sogenannten Objektbauten, das sind Gebäude für Gewerbe und Industrie, werden die Fußböden häufig als Doppel- bzw. Hohlraumboden ausgeführt. Dazu werden in einem Raster von beispielsweise 60 x 60 cm² Stützen gestellt, auf die anschließend Fußbodenplatten aufgelegt werden. Man vergleiche DE 39 06 317 A oder DE 195 04 349 C.

Sollen im Fußboden Anschlüsse für Starkstrom- oder Schwachstromleitungen vorgesehen werden, so werden Fußbodenplatten mit eingesetzten Unterflurtanks verwendet. In diese Tanks werden Anschlussmodule für Starkstrom, Telefon, Datennetzwerk, Fernsehen usw. eingesetzt. Die Verbindung von diesen Anschlussmodulen zur festen Gebäudeinstallation erfolgt mit Hilfe von Starkstromund Schwachstromleitungen, die im Doppelboden liegen.

Bei der Erstinstallation des Objektbaus werden üblicherweise zuerst die Starkstrom- bzw. Schwachstromleitungen auf dem Rohboden verlegt. Die Verlegung erfolgt entweder lose oder mit Hilfe von Schellen, die auf den Rohboden gedübelt werden. Um zu verhindern, dass die bereits verlegten Leitungen das Aufstellen der Doppelboden-Stützen im vorgeschriebenen Rast behindern, sind geeignete Vorsichtsmaßnahmen zu ergreifen.

Die einfachste Maßnahme besteht darin, die Lage der Kabel und Leitungen auf dem Rohboden anzuzeichnen. Da bei lose verlegten Leitungen nicht verhindert werden kann, dass diese während der weiteren Montagearbeiten ihre Position ändern, müssen die Leitungen befestigt werden. Dies ist mit einem nicht unerheblichen Arbeits- und Zeitaufwand verbunden.

Es wurde bereits versucht, diesem Missstand dadurch zu begegnen, dass auf dem Rohboden zunächst sogenannte Kabelbahnen oder Kabelpritschen befestigt wurden.

Diese sind aus längs und quer laufenden Drähten zusammengesetzt und haben ein U-Profil. Da diese Kabelbahnen normalerweise über Kopf und an Wandkonsolen befestigt werden, sind sie für eine Bodenmontage denkbar ungeeignet. Nach ihrer Montage kann der Boden nicht mehr befahren werden. Außerdem bilden sie Stolperfallen für das Arbeitspersonal.

Es sind auch schon aus Kunststoff bestehende Installationskanäle und Leitungsführungskanäle für die Unterflurmontage vorgeschlagen worden. Man vergleiche DE 44 11 552 C, DE 91 09 768 U oder DE 1 989 459 U. Mit diesen Kanälen sind dieselben Nachteile verbunden wie mit den zuvor erwähnten Kabelbahnen und Kabelpritschen.

Schließlich ist aus der DE 37 09 714 A eine Bodenplatte für eine freie Kabelverlegung im Doppel- oder Hohlraumboden bekannt. Auf dieser Bodenplatte werden mit Hilfe von regelmäßig verlegten Blöcken Kanäle gebildet, in denen ein oder mehrere Kabel verlegt werden können. Diese Kanäle werden anschließend mit einem Deckel abgedeckt. Entsprechend der Anzahl der zu verlegenden Kabel können mehrere dieser Bodenplatten auf dem Gebäudeboden verlegt werden. Diese Bodenplatten bilden sowohl die Kabelführungskanäle als auch die Tragelemente für die eigentlichen Fußbodenplatten. Dadurch scheidet jedoch die Verwendung der seit langem eingeführten Doppelbodensysteme aus.

Der vorliegenden Erfindung liegt die Aufgabe zugrunde, ein Verlegesystem für Starkstrom- und/oder Schwachstrom leitungen in Doppel- bzw. Hohlraumböden anzugeben, welches eine geordnete Verlegung mit einer flexiblen Anpassbarkeit an die jeweilige Baustelle verbindet.

Diese Aufgabe wird gelöst durch ein Verlegesystem mit den Merkmalen des Anspruchs 1.

Die vorliegende Erfindung beruht auf dem Prinzip, zunächst auf dem Rohboden des Gebäudes das flache Bodenprofil zu verlegen, wodurch die endgültige Lage der Starkstrom- und Schwachstromleitungen festgelegt ist, so dass die anschließende Montage des Doppelbodens und seiner Stützen nicht behindert wird. Durch die Ausbildung des Bodenprofils als flaches Profil kann die Baustelle weiterhin mit Schubkarren und dergleichen befahren werden, ohne dass Beschädigungen zu befürchten sind. Das flache Bodenprofil bildet auch keine Stolperfalle. Das Herunterfallen der verlegten Kabel und Leitungen von dem flachen Bodenprofil wird durch Verlegehilfsprofile verhindert, die erst zu einem späteren Zeitpunkt angebracht werden können.

Gemäß einer Ausgestaltung der Erfindung besitzen die Verlegehilfsprofile einen U-Querschnitt mit einem Basissteg, mit zwei Schenkeln und mit Befestigungsvorrichtungen zum Befestigen an dem Bodenprofil bzw. einer Unterlage, z.B. dem Rohboden. Diese U-förmigen Verlegehilfsprofile sind einfach anzubringen, indem sie auf das Bodenprofil aufgerastet werden, wobei die gegenseitigen Abstände je nach den Anforderungen der Baustelle enger oder weiter gewählt werden können. Außerdem lassen sich Abzweigungen von einzelnen Kabeln aus dem Hauptstrang problemlos durchführen, ganz im Gegensatz zu den eingangs beschriebenen, bisher verwendeten Kabelpritschen oder Unterflur-Installationskanälen.

Vorteilhafterweise sind an den Schenkeln der U-Profile Verbindungsprofile angeformt, die mit entsprechenden Verbindungsprofilen an der Unterseite des Bodenprofils kooperieren. Auf diese Weise lassen sich die Bodenprofile in mehreren Ebenen übereinander anbringen. Dadurch wird eine hohe Verlegekapazität erreicht. Auch lassen sich Starkstromleitungen und Schwachstromleitungen sicher trennen.

Vorzugsweise sind an den Seiten der Verlegehilfsprofile Verkettungsprofile angeformt, die das lückenlose Anreihen mehrerer Verlegehilfsprofile nebeneinander ermöglichen. Auf diese Weise lassen sich mehrere Kabelstränge nebeneinander unterbringen, beispielsweise getrennt nach Starkstrom und Schwachstrom, ohne dass zusätzliche Befestigungselemente erforderlich sind.

Oftmals werden die verlegten Kabel mit Hilfe von Kabelbindern zu Bündeln zusammengefasst. Um diese Kabelbinder an den Verlegehilfsprofilen befestigen zu können, sind an deren Frontkanten geeignete Befestigungszungen angeformt.

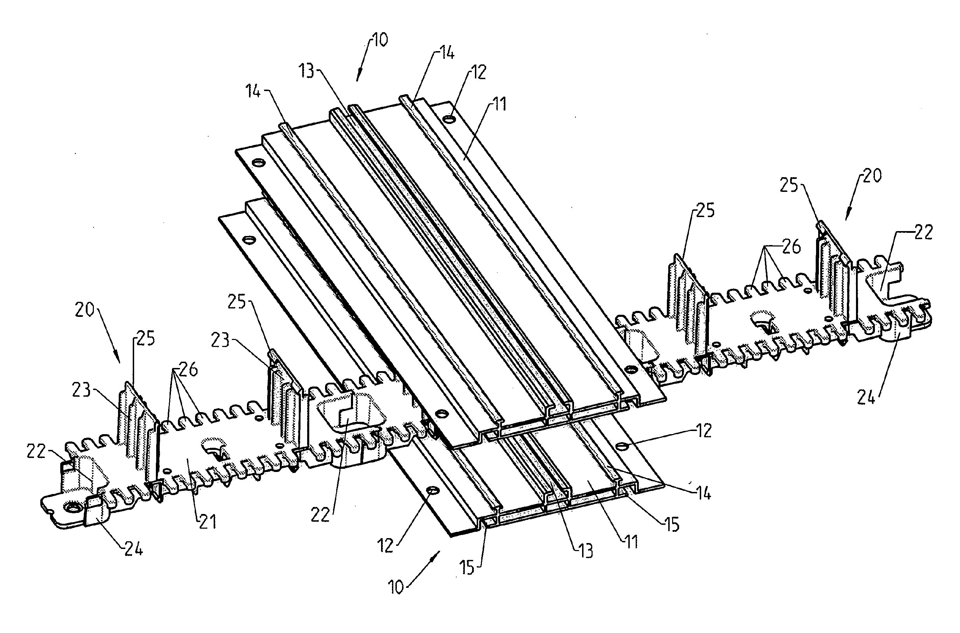

Anhand der Zeichnung soll die Erfindung in Form eines Ausführungsbeispiels näher erläutert werden.

Die Figur zeigt in isometrischer Darstellung ein auf einer (nicht dargestellten) Unterlage, z. B. dem Rohboden eines Objektbaus, verlegtes Bodenprofil 10. Dieses besteht aus einer flachen Profilplatte 11, auf deren Oberseite eine Haltenut 13 und Haltestege 14 angeformt sind. In die Unterseite sind Verbindungsnuten 15 eingeformt. Mit Hilfe von Öffnungen 12 wird das Bodenprofil 10 an der Unterlage angedübelt. Alternativ ist auch eine Befestigung mittels Kleben möglich.

Auf das Bodenprofil 10 sind drei seitlich nebeneinander lückenlos angereihte Verlegehilfsprofile 20 aufgerastet. Diese haben einen U-Querschnitt, gebildet durch einen Basissteg 21 und zwei Seitenschenkel 23. Öffnungen 22 am Basissteg 21 ermöglichen gegebenenfalls eine Schraubmontage an der Unterlage. Zum Verketten der Verlegehilfsprofile 20 sind an den Enden der Basisstege 21 geeignete Verkettungsprofile 24 angeformt.

Die Verlegehilfsprofile 20 führen und halten die verlegten Starkstrom- und Schwachstromleitungen (nicht dargestellt).

An den freien Kanten der Seitenschenkel 23 sind Verbindungsprofile 25 angeformt, die mit den Verbindungsprofilen 15 an der Unterseite des Bodenprofils 10 kooperieren. Dadurch ist es möglich, ein zweites Bodenprofil 10 mit Abstand zum ersten Bodenprofil zu verlegen, wie dies in der Zeichnung dargestellt ist. Dadurch wird die Verlegekapazität praktisch verdoppelt.

## Patentansprüche

1. Verlegesystem zum geordneten Verlegen von Starkstrom- und/oder Schwachstromleitungen in Doppel- bzw. Hohlraumböden, **gekennzeichnet durch**
- ein flaches Bodenprofil (10)
-- mit ersten Einrichtungen (12) zum Befestigen an einer Unterlage
-- und mit zweiten Einrichtungen in Form von Haltestegen (14) bzw. Haltenuten (13) zum Aufsetzen von Verlegehilfsprofilen (20) an seiner Oberseite.

2. Verlegesystem nach Anspruch 1, **dadurch gekennzeichnet, dass** das Verlegehilfsprofil (20) einen U-Querschnitt besitzt mit einem Basissteg (21), zwei Schenkeln (23) und Befestigungsvorrichtungen (22) zum Befestigen an dem Bodenprofil (10) bzw. einer Unterlage.

3. Verlegesystem nach Anspruch 1 und 2, **dadurch gekennzeichnet, dass** an den Schenkeln (23) der Verlegehilfsprofile (20) Verbindungsprofile (25) angeformt sind, die mit entsprechenden Verbindungsprofilen (15) an der Unterseite der Bodenprofile (10) kooperieren.

4. Verlegesystem nach einem der Ansprüche 1 bis 3, **dadurch gekennzeichnet, dass** an den Stirnseiten der Verlegehilfsprofile (20) Verkettungsprofile (24) zum lückenlosen Anreihen mehrerer Verlegehilfsprofile (20) angeformt sind.

5. Verlegesystem nach einem der Ansprüche 1 bis 4, **dadurch gekennzeichnet, dass** an den Frontkanten der Verlegehilfsprofile (20) Befestigungszungen (26) für Kabelbinder oder dergleichen angeformt sind.
